# EUROPÄISCHE PATENTANMELDUNG

(11) **EP 3 560 328 A1**
(43) Veröffentlichungstag der Anmeldung: **30.10.2019**
(21) Anmeldenummer: 18169435.7
(22) Anmeldetag: 26.04.2018
(51) Int. Cl.: A01G 31/04

(54) **PFLANZENANBAUVORRICHTUNG**

(71) Anmelder: Schmutzer, Lucas, 2345 Brunn am Gebirge (AT)
(72) Erfinder: Schmutzer, Lucas, 2345 Brunn am Gebirge (AT)
(74) Vertreter: Sonn & Partner Patentanwälte

(57) **Zusammenfassung**

Pflanzenanbauvorrichtung (1) aufweisend:
- ein Gehäuse (2),
- eine rotierbar am Gehäuse (2) gelagerte Aufnahmetrommel (3) mit mehreren Pflanzenaufnahmebehältern (5) für Pflanzen (6),
- einen Antrieb (8) zum Rotieren der Aufnahmetrommel (3) innerhalb des Gehäuses (2),
- eine Robotereinrichtung (10) mit einer Halterung (11) für einen ersten Arbeitskopf (12) zur Versorgung der Pflanzen (6) in den Pflanzenaufnahmebehältern (5), mit einer ersten Linearführung (13) zum Verschieben der Halterung (11) für den ersten Arbeitskopf (12) entlang einer ersten Achse und mit einer zweiten Linearführung (14) zum Verschieben der ersten Linearführung (13) gemeinsam mit der Halterung (11) für den ersten Arbeitskopf (12) entlang einer zweiten Achse.

## Beschreibung

Die Erfindung betrifft eine Pflanzenanbauvorrichtung aufweisend:
- ein Gehäuse,
- eine rotierbar am Gehäuse gelagerte Aufnahmetrommel mit mehreren Pflanzenaufnahmebehältern für Pflanzen,
- einen Antrieb zum Rotieren der Aufnahmetrommel innerhalb des Gehäuses.

Aufgrund der rotierenden Pflanzenaufnahmebehälter werden solche Pflanzenanbauvorrichtungen im Stand der Technik vielfach als "hydroponic ferris wheel" (wörtlich Hydroponik-Riesenrad) bezeichnet.

In der US 6,840,007 B2 wird beispielsweise eine rotierende Vorrichtung zum Anbau von Pflanzen beschrieben. Die Vorrichtung weist einen Rahmen mit daran befestigten länglichen Aufnahmekörben für die Pflanzen auf. Der Rahmen mit den Aufnahmekörben wird mittels eines Stützgestells über einer Wasserstation gehalten. Die Wasserstation weist einen Wassertank auf, welcher eine konkave Aufnahmeschüssel speist. Bei der Rotation der Vorrichtung werden die Aufnahmekörbe für die Pflanzen durch die Versorgungsschüssel durchgeführt. Diese Ausführung ist jedoch dahingehend nachteilig, dass die Wasserversorgung der Pflanzen beim Durchgang durch die Aufnahmeschüssel wenig zielgerichtet ist. Hinsichtlich dieses Problems wird beim Stand der Technik lediglich vorgeschlagen, den Füllstand der Versorgungsschüssel zu steuern oder den Rahmen anzuheben, um die Wasserversorgung zeitweise zu unterbrechen. Weiters führt stehendes Wasser in Verbindung mit organischer Materie zur Bakterienbildung und Verschlammung.

Die Aufgabe der vorliegenden Erfindung besteht darin, zumindest einen Nachteil des Standes der Technik zu lindern bzw. zu beseitigen. Die Erfindung setzt sich insbesondere zum Ziel, die Versorgung der Pflanzen, insbesondere bereits die Anpflanzung und gegebenenfalls auch die Ernte, mit technisch einfachen Mitteln zu automatisieren.

Die Erfindung ist gekennzeichnet durch eine Robotereinrichtung mit einer Halterung für einen ersten Arbeitskopf zur Versorgung der Pflanzen in den Pflanzenaufnahmebehältern, mit einer ersten Linearführung zum Verschieben der Halterung für den ersten Arbeitskopf entlang einer ersten Achse und mit einer zweiten Linearführung zum Verschieben der ersten Linearführung gemeinsam mit der Halterung für den ersten Arbeitskopf entlang einer zweiten Achse.

Demnach wird die Versorgung der Pflanzen, insbesondere auch bereits die Aussaat, mit der Robotereinrichtung durchgeführt. Zu diesem Zweck wird der erste Arbeitskopf, vorzugsweise lösbar, an der Halterung der Robotereinrichtung angebracht. Die lösbare Aufnahme des ersten Arbeitskopfes wird vorzugsweise durch eine Steuereinheit gesteuert. Um den ersten Arbeitskopf innerhalb der Aufnahmetrommel an die gewünschte Stelle, beispielsweise eine der Pflanzen in den Pflanzenaufnahmebehältern, bewegen zu können, ist eine (zumindest) zweiachsige Führungs- bzw. Antriebseinrichtung mit der ersten und der zweiten Linearführung vorgesehen. Die Führungseinrichtung ist bevorzugt mit einer Antriebsvorrichtung, beispielsweise einem Elektromotor, verbunden, welche die Bewegung entlang der ersten bzw. zweiten Achse bewirkt. Die Antriebsvorrichtung wird bevorzugt von einer elektronischen Steuereinheit angesteuert. Um jede Stelle in den Pflanzenaufnahmebehältern erreichen zu können, koordiniert die elektronische Steuereinheit die Bewegung des ersten Arbeitskopfes der Robotereinrichtung mit der Rotation der Aufnahmetrommel. Zur gezielten Bewirtschaftung der Pflanzenaufnahmebehälter kann die elektronische Steuereinheit ein Steuerprogramm aufweisen, welches im Betrieb der Pflanzenanbauvorrichtung durchlaufen wird.

Der Arbeitskopf, die zugehörige Halterung und die Linearführungen sind im Stand der Technik von andersartigen Pflanzenanbausystemen zur Bewirtschaftung von in Draufsicht rechteckigen Beeten im Freien bekannt, beispielsweise von dem Open Source-Projekt "FarmBot" (https://en.wikipedia.org/wiki/FarmBot). Bei der vorliegenden Pflanzenanbauvorrichtung wird jedoch der besondere Vorteil erzielt, dass die Robotereinrichtung gegenüber der bekannten Ausführung wesentlich vereinfacht werden kann,weil die rotierbare Aufnahmetrommel bereits einen Freiheitsgrad der Bewegung, nämlich einen Rotationsfreiheitsgrad, zur Verfügung stellt. Zudem wird eine platzsparende Ausführung erzielt, welche überdies wetterunabhängig ist.

Für die Zwecke dieser Offenbarung beziehen sich die Orts- und Richtungsangaben, wie "oben", "unten", "vorne", "hinten", auf einen Gebrauchszustand der Pflanzenanbauvorrichtung mit im Wesentlichen horizontaler Ausrichtung der Drehachse der Aufnahmetrommel. Bei einer abweichenden Anordnung der Pflanzenanbauvorrichtung, beispielsweise mit vertikaler Ausrichtung der Drehachse der Aufnahmetrommel, sind die Orts- und Richtungsangaben entsprechend zu übertragen.

Gemäß einer bevorzugten Ausführungsform erstreckt sich die erste Achse der Robotereinrichtung im Wesentlichen in vertikaler Richtung und die zweite Achse der Robotereinrichtung im Wesentlichen in Richtung der Drehachse der Aufnahmetrommel. Durch die erste Linearführung kann der erste Arbeitskopf an der Halterung von einer angehobenen Wartestellung, in welcher eine Kollision mit den Pflanzen bei der Rotation der Aufnahmetrommel vermieden werden kann, und einer abgesenkten Arbeitsstellung, in welcher einzelne Pflanzen in den Pflanzenaufnahmebehältern versorgt, beispielsweise gegossen, werden, überführt werden. Die zweite Linearführung ermöglicht zudem, dass jede Pflanze in den vorzugsweise in axialer Richtung erstreckten Pflanzenaufnahmebehältern erreicht werden kann.

Bei dieser Ausführungsform ist insbesondere vorgesehen, dass die zweite Achse der Robotereinrichtung im Wesentlichen mit der Drehachse der Aufnahmetrommel zusammenfällt. Vorteilhafterweise wird daher die zweite Linearführung zentral innerhalb der Aufnahmetrommel angeordnet.

Gemäß einer besonders bevorzugten Ausführungsform weist der Arbeitskopf genau zwei Translationsfreiheitsgrade, entlang der ersten Achse und der zweiten Achse, auf. Bei dieser Ausführungsform wird daher auf eine Linearführung in horizontaler Richtung senkrecht zur Drehachse der Aufnahmetrommel verzichtet. Diese Ausführung ist konstruktiv besonders einfach, jedoch in Verbindung mit der rotierenden Aufnahmetrommel ausreichend, um die einzelnen Pflanzen in den Pflanzenaufnahmebehältern mit dem Arbeitskopf zu erreichen. Hierfür ist es lediglich erforderlich, die Aufnahmetrommel in die passende Drehstellung zu bringen und danach den Arbeitskopf über die erste und zweite Linearführung entsprechend zu bewegen. Durch die Kombination der rotierenden Aufnahmetrommel mit der zweiachsigen Robotereinrichtung kann daher die Versorgung der Pflanzen auf einfache und effektive Weise gewährleistet werden.

Um unterschiedliche Aufgaben des Pflanzenanbaus zu automatisieren, ist es günstig, wenn ein Wechselaufsatzhalter zum Austauschen des ersten Arbeitskopfes gegen einen zweiten Arbeitskopf, vorzugsweise zudem zum Austauschen des ersten Arbeitskopfes gegen einen dritten Arbeitskopf, insbesondere zudem zum Austauschen des ersten Arbeitskopfes gegen einen vierten Arbeitskopf, vorgesehen ist. Demnach ist die Halterung der Robotereinrichtung in einer ersten Funktionsstellung mit dem ersten Arbeitskopf, in einer zweiten Funktionsstellung mit dem zweiten Arbeitskopf, gegebenenfalls in einer dritten Funktionsstellung mit dem dritten Arbeitskopf und in einer vierten Funktionsstellung mit dem vierten Arbeitskopf ausgestattet. Jeder Arbeitskopf kann zumindest eine Funktion bei der Anpflanzung und Versorgung der Pflanzen erfüllen.

Um den Wechsel zwischen dem ersten und zweiten, vorzugsweise zudem dritten und vierten, Arbeitskopf zu vereinfachen, ist es von Vorteil, wenn der Wechselaufsatzhalter insbesondere um eine im Wesentlichen vertikale Achse verschwenkbar, vorzugsweise rotierbar, am Gehäuse angeordnet ist. Somit kann der Wechselaufsatzhalter im Betrieb derart verschwenkt bzw. rotiert werden, dass die jeweilige Abgabe- oder Aufnahmestelle für den ersten oder zweiten (gegebenenfalls auch dritten oder vierten) Arbeitskopf durch Verfahren der Halterung an der Robotereinrichtung entlang der ersten und zweiten Linearführung erreicht werden kann. Vorteilhafterweise kann daher der Wechsel zwischen dem ersten und zweiten Arbeitskopf (bzw. dem dritten und vierten Arbeitskopf) auf einfache Weise durchgeführt werden, ohne dass die Robotereinrichtung einen Translationsfreiheitsgrad in Richtung quer zur Drehachse benötigen würde.

Besonders bevorzugt erstreckt sich die vertikale Schwenk- bzw. Rotationsachse des Wechselaufsatzhalters im Wesentlichen in einer vertikalen Mittel- bzw. Symmetrieebene der Aufnahmetrommel, in welcher auch die horizontale Drehachse der Aufnahmetrommel verläuft.

Gemäß einer bevorzugten Ausführungsform ist eine Antriebseinrichtung, insbesondere ein Elektromotor, zum Verschwenken, insbesondere Rotieren, des Wechselaufsatzhalters vorgesehen. Beim Wechseln zwischen den verschiedenen Funktionsstellungen der Robotereinrichtung kann der Wechselaufsatzhalter mittels der Antriebseinrichtung einerseits in die erste, zweite, dritte oder vierte Abgabestellung zum Abgeben des ersten, zweiten, dritten oder vierten Arbeitskopfes von der Halterung an der Robotereinrichtung an den Wechselaufsatzhalter und andererseits in die erste, zweite, dritte oder vierte Aufnahmestellung zur Aufnahme des ersten, zweiten, dritten oder vierten Arbeitskopfes von dem Wechselaufsatzhalter in die Halterung an der Robotereinrichtung bewegt werden. Bevorzugt fallen die erste, zweite, dritte und vierte Abgabestellung mit der ersten, zweiten, dritten und vierten Aufnahmestellung des Wechselaufsatzhalters zusammen.

Gemäß einer bevorzugten Ausführungsform weist der Wechselaufsatzhalter zumindest eine erste Aufnahme für den ersten Arbeitskopf und eine zweite Aufnahme für den zweiten Arbeitskopf auf, wobei bevorzugt eine dritte Aufnahme für den dritten Arbeitskopf und/oder eine vierte Aufnahme für den vierten Arbeitskopf vorgesehen ist. Die erste und zweite, gegebenenfalls auch die dritte und die vierte Aufnahme, sind bevorzugt jeweils als nach oben offene Ausnehmungen des Wechselaufsatzhalters ausgeführt, in welchen der erste, zweite, dritte bzw. vierte Arbeitskopf vorzugsweise im Wesentlichen passgenau angeordnet werden können.

Je nach Ausführung kann der erste Arbeitskopf als Saugaufsatz zum Ansaugen von Samen oder als Gießaufsatz zum Gießen der Pflanzen oder als Sensoraufsatz zum Messen insbesondere eines pH-Wertes oder als Unkrautunterdrückungsaufsatz zum Unterdrücken von Unkraut ausgebildet sein.

Gemäß einer bevorzugten Ausführungsform ist der erste Arbeitskopf als Saugaufsatz zum Ansaugen von Samen und/oder der zweite Arbeitskopf als Gießaufsatz zum Gießen der Pflanzen und/oder der dritte Arbeitskopf als Sensoraufsatz zum Messen insbesondere eines pH-Wertes und/oder der vierte Arbeitskopf als Unkrautunterdrückungsaufsatz zum Unterdrücken von Unkraut ausgebildet.

Um eine selbsttätige Anpflanzung der Pflanzen in den Pflanzenaufnahmebehältern zu ermöglichen, weist der Wechselaufsatzhalter bevorzugt zumindest ein Samenaufnahmefach auf. In dem Samenaufnahmefach können Samen vorgehalten werden, welche insbesondere mit dem Saugaufsatz der Robotereinrichtung angesaugt und an den Pflanzenaufnahmebehältern abgegeben werden können.

Um den Austausch der Arbeitsköpfe zu erleichtern, ist es günstig, wenn der Wechselaufsatzhalter vorzugsweise im Wesentlichen zur Hälfte vom Gehäuse nach vorne vorsteht. Die andere Hälfte des Wechselaufsatzhalters kann (temporär) im Gehäuse verborgen sein. Somit kann zumindest eine der Aufnahmen des Wechselaufsatzhalters derart außerhalb des Gehäuses angeordnet werden, dass diese Aufnahme für das Einführen des Arbeitskopfes (oder die Abgabe des Arbeitskopfes) zugänglich ist. Zum Aufnehmen bzw. Abgeben des Arbeitskopfes wird - wie im Stand der Technik von dem "Farmbot" an sich bekannt - eine lösbare Verbindung, insbesondere eine Steck- und Magnetverbindung, vorgesehen.

Gemäß einer weiteren Ausführungsform befindet sich der Wechselaufsatzhalter unterhalb der Aufnahmetrommel.

Gemäß einer weiteren Ausführungsform ist der Wechselaufsatzhalter im Querschnitt (senkrecht zur Schwenk- bzw. Drehachse des Wechselaufsatzhalters) kreisförmig.

Um die Versorgung der Pflanzen mit einer kompakten Bauweise zu ermöglichen, sieht eine weitere Ausführungsform vor, dass die zweite Linearführung der Robotereinrichtung frei auskragend von einer Rückwand in Richtung der Drehachse der Aufnahmetrommel nach vorne absteht. Bei dieser Ausführungsform ist das freie Ende der zweiten Linearführung nicht von unten her abgestützt.

Gemäß einer weiteren Ausführungsform weist das Gehäuse an der Vorderseite eine Tür zum Abschließen der Aufnahmetrommel auf. Demnach weist die Aufnahmetrommel bei dieser

Ausführungsvariante an der Vorderseite eine Zugangsöffnung auf, welche mittels der Tür freigegeben bzw. geschlossen werden kann.

Gemäß einer weiteren Ausführungsform ist ein Frischwassertank vorgesehen, welcher über eine Frischwasserleitung mit der Robotereinrichtung verbunden ist. Diese Ausführungsform ist insbesondere dann zweckmäßig, wenn kein Wasseranschluss für Fließwasser zur Verfügung steht.

Um mehrere entsprechende Pflanzenanbauvorrichtungen aufeinander stapeln zu können, ist es günstig, wenn das Gehäuse im Wesentlichen quaderförmig ist.

Gemäß einer weiteren Ausführungsform ist zumindest ein Leuchtkörper, vorzugsweise an einer der Aufnahmetrommel zugewandten Rückwand des Gehäuses und/oder an der zweiten Linearführung der Robotereinrichtung, vorgesehen.

Als Pflanzenaufnahmebehälter sind bevorzugt in Richtung der Drehachse der Aufnahmetrommel langgestreckte Rohrelemente, insbesondere aus Kunststoff, mit oberseitigen Durchtrittsöffnungen für die Pflanzen vorgesehen.

Um den Arbeitskopf der Robotereinrichtung präzise an den gewünschten Ort innerhalb der Aufnahmetrommel bewegen zu können, ist bei einer weiteren Ausführungsform ein Sensor zur Erfassung der Drehposition der Aufnahmetrommel vorgesehen. Zur Ausbildung des Sensors kann die Aufnahmetrommel bei einer einfachen Ausführungsform zumindest einen, vorzugsweise eine Mehrzahl, insbesondere eine Vielzahl, von Drucksensoren aufweisen, welche in Umfangsrichtung der Aufnahmetrommel voneinander beabstandet sind Der zumindest eine Drucksensor kann beispielsweise mit einem feststehenden Betätigungselement, etwa ein Vorsprung, am Gehäuse betätigt werden. Bei Aktivierung eines der Drucksensoren durch das Betätigungselements wird die aktuelle Drehlage zwischen Aufnahmetrommel und Gehäuse erkannt. Je mehr Drucksensoren an der Aufnahmetrommel vorgesehen werden, desto höher ist die Auflösung, mit welcher die Drehlage der Aufnahmetrommel zum Gehäuse bekannt ist. Die relative Drehlage kann sodann der Steuereinheit übermittelt werden. Somit ist die Drehposition der Aufnahmetrommel zu jeder Zeit bekannt. Die Drehposition wird der Robotereinrichtung als Eingangssignal übergeben, so dass das Anfahren der gewünschten Position, beispielsweise eine der Durchtrittsöffnungen der Pflanzenaufnahmebehälter, präzise durchgeführt werden kann.

Gemäß einer weiteren Ausführungsform ist eine erste Sperrvorrichtung zwischen der Aufnahmetrommel und dem Gehäuse dazu vorgesehen, die Drehung der Aufnahmetrommel in eine erste Drehrichtung freizugeben und in eine zweite Drehrichtung zu sperren. Damit kann verhindert werden, dass schwerere Pflanzen die Aufnahmetrommel verdrehen, wenn der Antrieb nicht aktiv ist.

Gemäß einer weiteren Ausführungsform ist eine zweite Sperrvorrichtung zwischen der Aufnahmetrommel und dem Gehäuse dazu vorgesehen, die Drehung der Aufnahmetrommel in die erste Drehrichtung in einer Freigabestellung freizugeben und in einer Sperrstellung zu sperren. Demnach kann die zweite Sperrvorrichtung zwischen der Freigabe- und der Sperrstellung bewegt werden, um wahlweise die Drehung der Aufnahmetrommel in die erste Drehrichtung freizugeben bzw. zu sperren.

Die Erfindung wird anhand eines in den Zeichnungen dargestellten, bevorzugten Ausführungsbeispiels weiter erläutert.
Fig. 1 zeigt schematisch eine Pflanzenanbauvorrichtung mit einem Gehäuse und einer darin rotierbaren Aufnahmetrommel, in welcher mehrere Pflanzenaufnahmebehälter über einen austauschbaren Arbeitskopf einer zweiachsigen Robotereinrichtung versorgt werden.

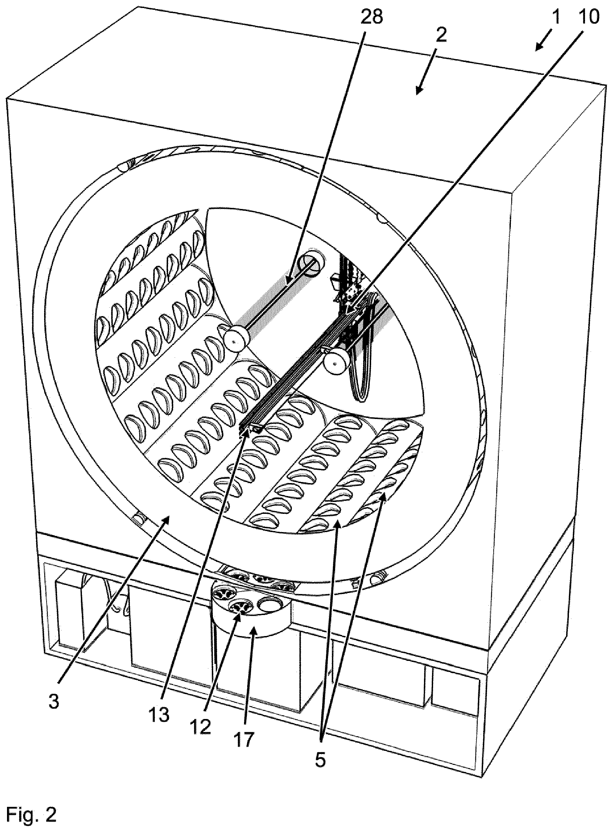

Fig. 2 zeigt die Pflanzenanbauvorrichtung gemäß Fig. 1 in einer Wartestellung der Robotereinrichtung, wobei eine Halterung für den Arbeitskopf nach hinten und nach oben verschoben ist.

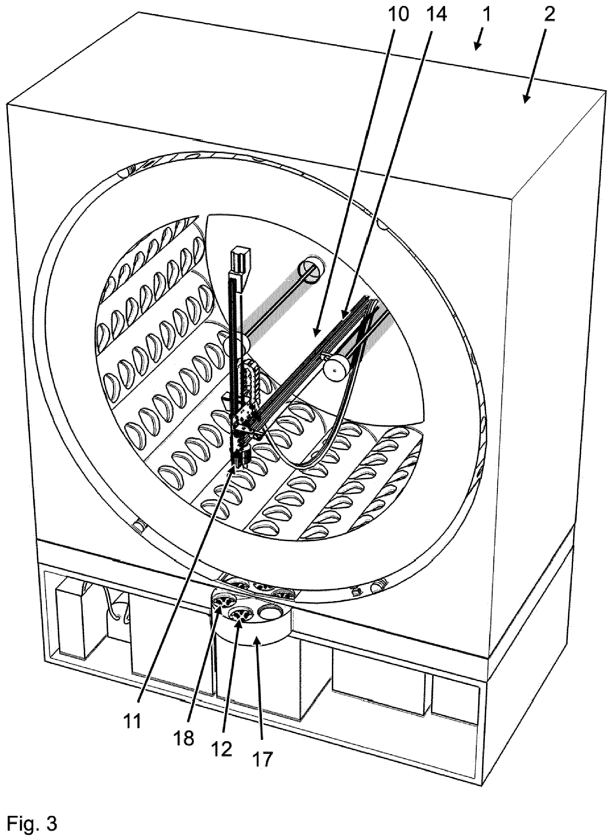

Fig. 3 zeigt die Pflanzenanbauvorrichtung gemäß Fig. 1, 2, wobei die Halterung der Robotereinrichtung nach vorne verschoben ist, um die Aufnahme eines Arbeitskopfes an der Halterung der Robotereinrichtung vorzubereiten.

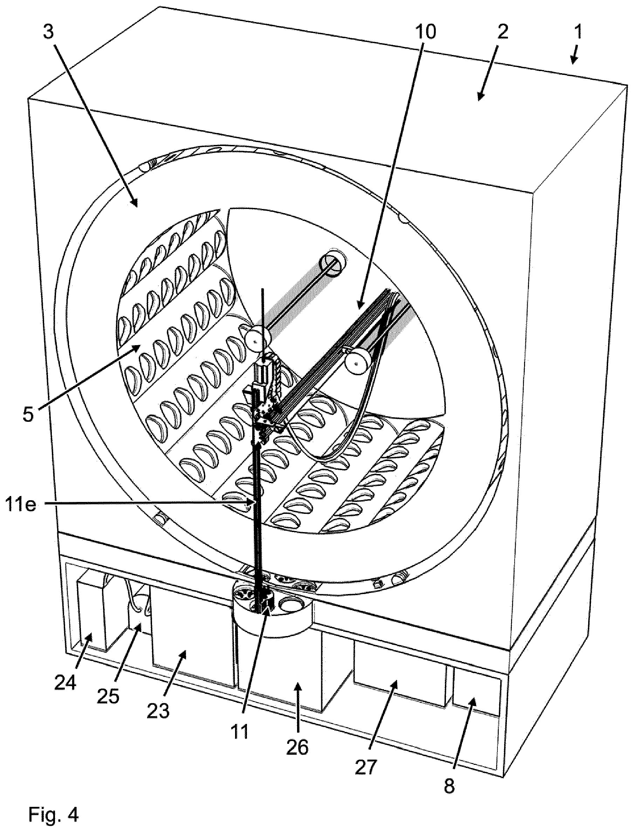

Fig. 4 zeigt die Pflanzenanbauvorrichtung gemäß Fig. 1 bis 3, wobei die Halterung der Robotereinrichtung nach unten verschoben ist, um den Arbeitskopf an die Halterung anzuschließen.

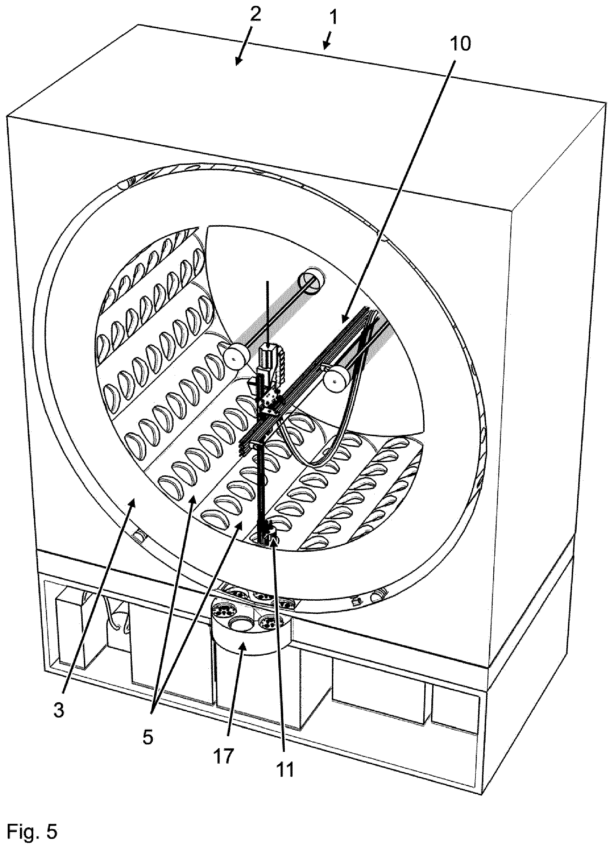

Fig. 5 zeigt die Pflanzenanbauvorrichtung gemäß Fig. 1 bis 4, wobei der Arbeitskopf an der Halterung der Robotereinrichtung einer der Pflanzen angenähert wurde.
Fig. 6 zeigt einen Ausschnitt der Pflanzenanbauvorrichtung gemäß den Fig. 1 bis 5.
Fig. 7 zeigt die Pflanzenanbauvorrichtung gemäß Fig. 1 bis 6, wobei das Gehäuse nicht dargestellt ist.

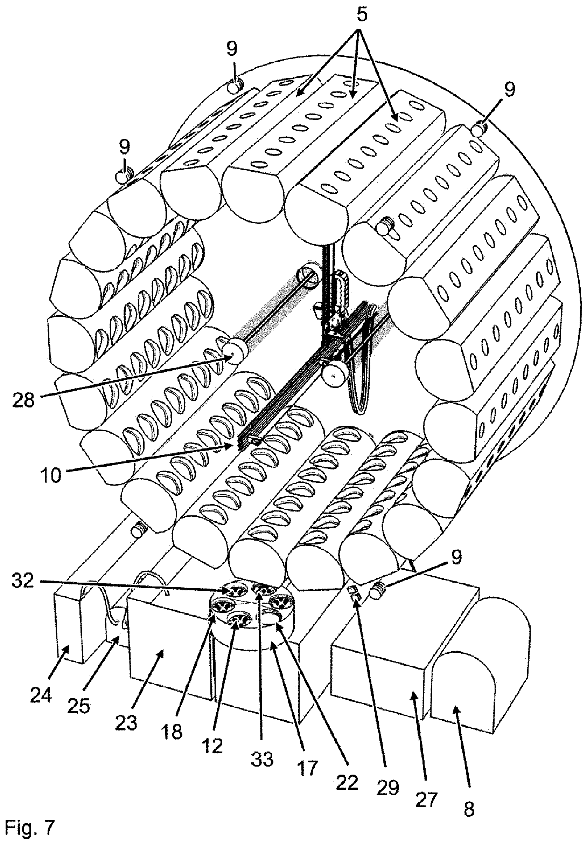

Die Figuren zeigen eine Pflanzenanbauvorrichtung 1 mit einem Gehäuse 2, in welchem eine Aufnahmetrommel 3 um eine Drehachse 4 drehbar gelagert ist. Das Gehäuse 2 ist quaderförmig, so dass mehrere Pflanzenanbauvorrichtungen 1 (wie dargestellt) aufeinander gestapelt werden können. An der Innenseite der Aufnahmetrommel sind einige Pflanzenaufnahmebehälter 5 zum Anbau von Pflanzen 6, wie Gemüse, angeordnet. Als Pflanzenaufnahmebehälter 5 sind in Richtung der Drehachse 4 der Aufnahmetrommel 3 langgestreckte Rohrelemente, insbesondere aus Kunststoff, vorgesehen. Die Pflanzenaufnahmebehälter 5 sind bevorzugt Hydroponik-Gefäße vorgesehen. An den Oberseiten der Rohrelemente sind Durchtrittsöffnungen 7 für die Pflanzen ausgebildet. Zum Rotieren der Aufnahmetrommel 3 innerhalb des Gehäuses 2 ist ein Antrieb 8, insbesondere ein Elektromotor, vorgesehen, welcher mit Lagern 9 (vgl. auch Fig. 7) zwischen der Aufnahmetrommel 3 und dem Gehäuse 2 verbunden ist.

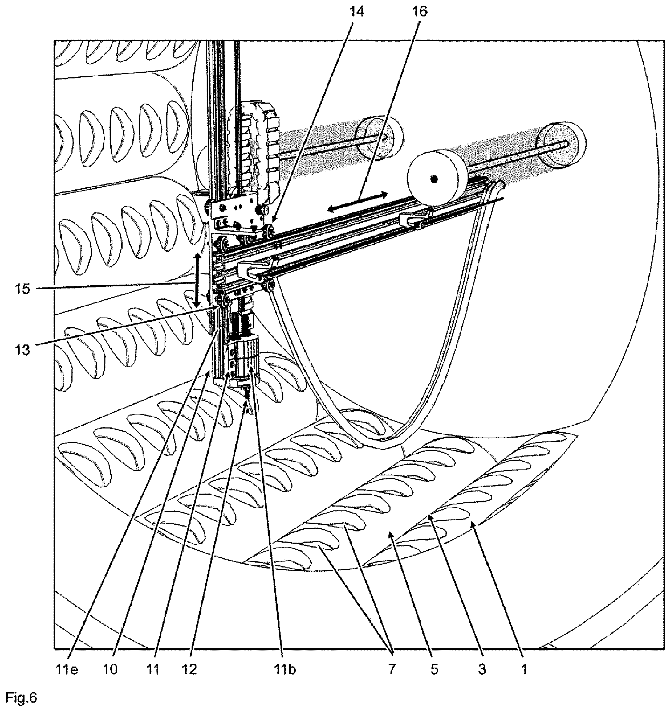

Die Pflanzenanbauvorrichtung 1 weist zudem eine Robotereinrichtung 10 auf, mit welcher die Versorgung der Pflanzen 6 automatisiert durchgeführt werden kann. Die Robotereinrichtung 10 weist, wie insbesondere aus Fig. 6 ersichtlich, eine Halterung 11 mit einem Haltearm 11a und einem am unteren Ende des Haltearms 11b angeordneten Haltekopf 11b auf. Der Haltekopf 11b ist zur lösbaren Anbringung zumindest eines ersten Arbeitskopfes 12 eingerichtet. Die Robotereinrichtung 10 weist zudem eine erste Linearführung 13 zum Verschieben der Halterung 11 für den ersten Arbeitskopf 12 entlang einer ersten Achse (vgl. Doppelpfeil 15 in Fig. 6) und eine zweite Linearführung 14 zum Verschieben der ersten Linearführung 13 gemeinsam mit der Halterung 11 für den ersten Arbeitskopf 12 entlang einer zweiten Achse (vgl. Doppelpfeil 16 in Fig. 6) auf. Die erste Linearführung 13 und die zweite Linearführung 14 weisen in der gezeigten Ausführungsform jeweils ein Führungsprofil und daran abrollende Laufrollen auf. Bei dieser Ausführung werden zumindest einzelne Laufrollen mittels einer (nicht gezeigten) Antriebsvorrichtung angetrieben, um eine Verschiebung der Halterung 11 entlang der ersten bzw. zweiten Achse zu bewirken. In der gezeigten Ausführung erstreckt sich die erste Achse der Robotereinrichtung 10 im Wesentlichen in vertikaler Richtung und die zweite Achse der Robotereinrichtung 10 im Wesentlichen in Richtung der Drehachse 4 der Aufnahmetrommel 3, wobei die zweite Achse der Robotereinrichtung 10 mit der Drehachse 4 der Aufnahmetrommel 3 zusammenfällt. Weitere Translations- oder Rotationsfreiheitsgrade sind bei der gezeigten Ausführungsvariante nicht vorgesehen. In der gezeigten Ausführung ragt die zweite Linearführung 14 der Robotereinrichtung 10 frei (d.h. ohne Abstützung von unten) von einer Rückwand 2a des Gehäuses 2 in Richtung der Drehachse 4 der Aufnahmetrommel 3 nach vorne.

Die Pflanzenanbauvorrichtung 1 weist zudem einen Wechselaufsatzhalter 17 zum Austauschen des ersten Arbeitskopfes 12 gegen einen zweiten Arbeitskopf 18, vorzugsweise zudem zum Austauschen des ersten Arbeitskopfes 12 gegen einen dritten Arbeitskopf 32 (vgl. Fig. 7), insbesondere zudem zum Austauschen des ersten Arbeitskopfes gegen einen vierten Arbeitskopf 33 (vgl. Fig. 7), auf. Selbstverständlich können noch weitere Arbeitsköpfe, beispielsweise ein Sensorkopf zum Messen der Feuchtigkeit in den Pflanzenaufnahmebehältern oder ein Schneideaufsatz, vorgesehen sein. Der Wechselaufsatzhalter 17 ist um eine vertikale Achse 19 rotierbar am Gehäuse 2 gelagert. In der gezeigten Ausführung ist der Antrieb 8 einerseits zum Drehen der Aufnahmetrommel 3 und andererseits zum Rotieren des Wechselaufsatzhalters 17 um die vertikale Achse 19 eingerichtet. Der Wechselaufsatzhalter 17 weist zumindest eine erste Aufnahme 20 für den ersten Arbeitskopf 12 und eine zweite Aufnahme 21 für den zweiten Arbeitskopf 18 auf. Bevorzugt sind zudem eine dritte Aufnahme für den dritten Arbeitskopf und eine vierte Aufnahme für den vierten Arbeitskopf vorgesehen.

In der gezeigten Ausführung ist der erste Arbeitskopf 12 als Gießaufsatz zum Gießen der Pflanzen ausgebildet. Hierfür weist der Gießaufsatz einen Sprühkopf auf, mit welchem Wasser auf die Pflanzen 6 abgegeben werden kann. Der zweite Arbeitskopf 18 ist als Saugaufsatz zum Ansaugen von Samen aus einem Samenaufnahmefach 22 und zum Abgeben der angesaugten Samen in einen der Pflanzenaufnahmebehälter 6 ausgebildet. Als Samenaufnahmefach 22 kann eine weitere Aufnahme des Wechselaufsatzhalters 17 vorgesehen sein. Der dritte Arbeitskopf 32 ist als Sensoraufsatz zum Messen insbesondere eines pH-Wertes ausgebildet. Der vierte Arbeitskopf 33 ist als Unkrautunterdrückungsaufsatz ausgebildet, mit welchem Unkraut mechanisch entfernt werden kann.

Der Wechselaufsatzhalter 17 steht im Wesentlichen zur Hälfte vom Gehäuse 2 nach vorne vor, so dass die Halterung 11 auf die vorne angeordnete Aufnahme abgesenkt werden kann, um den Wechsel zwischen den Arbeitsköpfen oder das Aufnehmen von Samen zu ermöglichen.

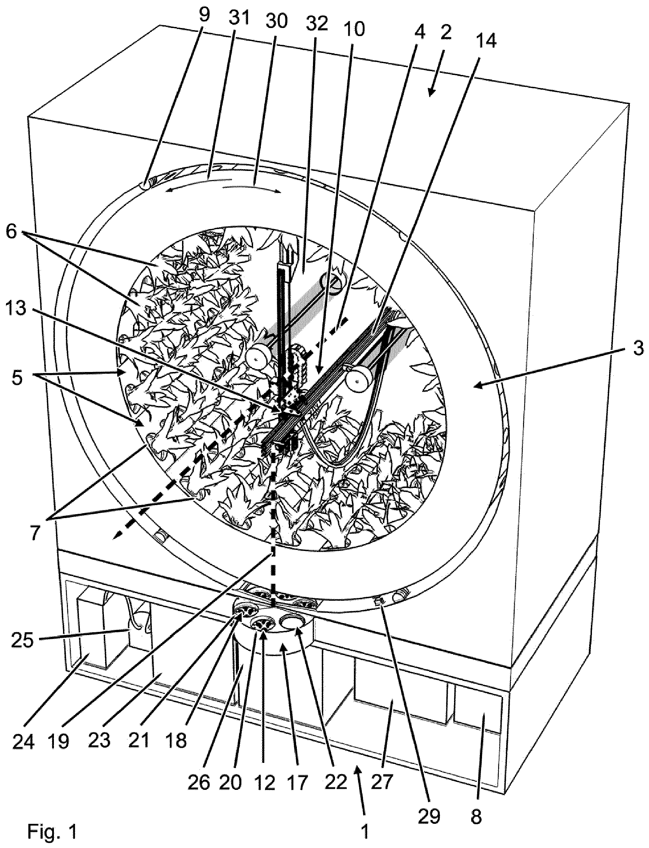

Die Pflanzenanbauvorrichtung 1 weist in der gezeigten Ausführung (vgl. Fig. 1) zudem einen Frischwassertank 23 auf, in dem Frischwasser für die Versorgung der Pflanzen 6 vorgehalten wird. Der Frischwassertank 23 ist über eine Frischwasserleitung mit der Robotereinrichtung 10 verbunden. Beim Anbringen des Gießaufsatzes an der Halterung 11 wird eine wasserführende Verbindung vom Frischwassertank 9 über die Frischwasserleitung zum Gießaufsatz hergestellt, so dass das Wasser über den Gießaufsatz an die Pflanzen abgegeben werden kann. Weiters ist ein Nährstoffbehälter 24 vorgesehen, welcher über eine Pumpe 25 mit dem Frischwassertank 23 verbunden ist. Das Brauchwasser wird in einem Brauchwassertank 26 gesammelt, welches an der tiefsten Stelle der Aufnahmetrommel angeordnet ist. Die Steuerung der elektronischen Komponenten der Pflanzenanbauvorrichtung, wie Antrieb 8 für die Aufnahmetrommel 3 und den Wechselaufsatzhalter 17, Pumpe 25, Antriebsvorrichtung für die Robotereinrichtung 10, erfolgt mittels einer elektronischen Steuereinheit (kurz Steuerung 27).

Die Pflanzenanbauvorrichtung 1 weist zudem mehrere, in der gezeigten Ausführung zwei, Leuchtkörper 28 auf, welche von der Rückwand 2a des Gehäuses 2 in Richtung der der zweiten Linearführung 14 der Robotereinrichtung 10 abstehen.

Die Pflanzenanbauvorrichtung 1 weist ferner einen Sensor 29 auf, mit welchem die Drehposition der Aufnahmetrommel 3 erfasst und der Steuerung 27 übermittelt wird. Beim Verfahren der Robotereinrichtung 10 in die gewünschte Arbeitsstellung ist so die Drehstellung der Aufnahmetrommel 3 bekannt.

Die Pflanzenanbauvorrichtung 1 weist ferner eine erste Sperrvorrichtung zwischen der Aufnahmetrommel 3 und dem Gehäuse 2 auf, mit welcher die Drehung der Aufnahmetrommel 3 in die eine Drehrichtung 30 freigegeben, aber in die andere Drehrichtung 31 ständig gesperrt wird. Zudem ist eine zweite Sperrvorrichtung zwischen der Aufnahmetrommel 3 und dem Gehäuse 2 vorgesehen, welche zwischen einer Freigabestellung und einer Sperrstellung überführbar ist. In der Freigabestellung wird die Drehung der Aufnahmetrommel in die erste Drehrichtung 30 freigegeben und in der Sperrstellung gesperrt. Hiermit kann einem unerwünschten Verrutschen der Trommel wegen ungleicher Gewichtsverteilung durch unterschiedliches Pflanzenwachstum vorgebeugt werden.

## Patentansprüche

1. Pflanzenanbauvorrichtung (1) aufweisend:
- ein Gehäuse (2),
- eine rotierbar am Gehäuse (2) gelagerte Aufnahmetrommel (3) mit mehreren Pflanzenaufnahmebehältern (5) für Pflanzen (6),
- ein Antrieb (8) zum Rotieren der Aufnahmetrommel (3) innerhalb des Gehäuses (2),
**gekennzeichnet durch**
- eine Robotereinrichtung (10) mit einer Halterung (11) für einen ersten Arbeitskopf (12) zur Versorgung der Pflanzen (6) in den Pflanzenaufnahmebehältern (5), mit einer ersten Linearführung (13) zum Verschieben der Halterung (11) für den ersten Arbeitskopf (12) entlang einer ersten Achse und mit einer zweiten Linearführung (14) zum Verschieben der ersten Linearführung (13) gemeinsam mit der Halterung (11) für den ersten Arbeitskopf (12) entlang einer zweiten Achse.

2. Pflanzenanbauvorrichtung (1) nach Anspruch 1, **dadurch gekennzeichnet, dass** sich die erste Achse der Robotereinrichtung (10) im Wesentlichen in vertikaler Richtung und die zweite Achse der Robotereinrichtung (10) im Wesentlichen in Richtung der Drehachse (4) der Aufnahmetrommel (3) erstreckt, wobei die zweite Achse der Robotereinrichtung (10) bevorzugt im Wesentlichen mit der Drehachse (4) der Aufnahmetrommel (3) zusammenfällt.

3. Pflanzenanbauvorrichtung (1) nach Anspruch 1 oder 2, **dadurch gekennzeichnet, dass** die Robotereinrichtung (10) genau zwei Translationsfreiheitsgrade, entlang der ersten Achse und der zweiten Achse, aufweist.

4. Pflanzenanbauvorrichtung (1) nach einem der Ansprüche 1 bis 3, **dadurch gekennzeichnet, dass** ein Wechselaufsatzhalter (17) zum Austauschen des ersten Arbeitskopfes (12) gegen einen zweiten Arbeitskopf (18), vorzugsweise zudem zum Austauschen des ersten Arbeitskopfes (12) gegen einen dritten Arbeitskopf, insbesondere zudem zum Austauschen des ersten Arbeitskopfes (12) gegen einen vierten Arbeitskopf, vorgesehen ist.

5. Pflanzenanbauvorrichtung (1) nach Anspruch 4, **dadurch gekennzeichnet, dass** der Wechselaufsatzhalter (17) insbesondere um eine im Wesentlichen vertikale Achse (19) verschwenkbar, vorzugsweise rotierbar, am Gehäuse (2) angeordnet ist, wobei bevorzugt eine Antriebseinrichtung, insbesondere ein Elektromotor, zum Verschwenken, insbesondere Rotieren des Wechselaufsatzhalters (17) vorgesehen ist.

6. Pflanzenanbauvorrichtung (1) nach Anspruch 4 oder 5, **dadurch gekennzeichnet, dass** der Wechselaufsatzhalter (17) zumindest eine erste Aufnahme (20) für den ersten Arbeitskopf (12) und eine zweite Aufnahme (21) für den zweiten Arbeitskopf (21) aufweist, wobei bevorzugt eine dritte Aufnahme für den dritten Arbeitskopf und/oder eine vierte Aufnahme für den vierten Arbeitskopf vorgesehen sind.

7. Pflanzenanbauvorrichtung (1) nach einem der Ansprüche 1 bis 6, **dadurch gekennzeichnet, dass** der erste Arbeitskopf (12) als Saugaufsatz zum Ansaugen von Samen und/oder dass der zweite Arbeitskopf (18) als Gießaufsatz zum Gießen der Pflanzen und/oder dass der dritte Arbeitskopf (32) als Sensoraufsatz zum Messen insbesondere eines pH-Wertes und/oder dass der vierte Arbeitskopf (33) als Unkrautunterdrückungsaufsatz zum Unterdrücken von ausgebildet ist.

8. Pflanzenanbauvorrichtung (1) nach einem der Ansprüche 4 bis 7, **dadurch gekennzeichnet, dass** der Wechselaufsatzhalter (17) vorzugsweise im Wesentlichen zur Hälfte vom Gehäuse (2) nach vorne vorsteht.

9. Pflanzenanbauvorrichtung (1) nach einem der Ansprüche 1 bis 8, **dadurch gekennzeichnet, dass** die zweite Linearführung (14) der Robotereinrichtung (10) frei auskragend von einer Rückwand (2a) in Richtung der Drehachse (4) der Aufnahmetrommel (3) nach vorne absteht.

10. Pflanzenanbauvorrichtung (1) nach einem der Ansprüche 1 bis 9, **dadurch gekennzeichnet, dass** ein Frischwassertank (23) vorgesehen ist, welcher über eine Frischwasserleitung mit der Robotereinrichtung (10) verbunden ist.

11. Pflanzenanbauvorrichtung (1) nach einem der Ansprüche 1 bis 10, **dadurch gekennzeichnet, dass** das Gehäuse (2) im Wesentlichen quaderförmig ist.

12. Pflanzenanbauvorrichtung (1) nach einem der Ansprüche 1 bis 11, **dadurch gekennzeichnet, dass** zumindest ein Leuchtkörper (28), vorzugsweise an einer der Aufnahmetrommel (3) zugewandten Rückwand (2a) des Gehäuses (2) und/oder an der zweiten Linearführung (14) der Robotereinrichtung (10), vorgesehen ist.

13. Pflanzenanbauvorrichtung (1) nach einem der Ansprüche 1 bis 12, **dadurch gekennzeichnet, dass** ein Sensor (29) zur Erfassung der Drehposition der Aufnahmetrommel (3) vorgesehen ist.

14. Pflanzenanbauvorrichtung (1) nach einem der Ansprüche 1 bis 13, **dadurch gekennzeichnet, dass** eine erste Sperrvorrichtung zwischen der Aufnahmetrommel (3) und dem Gehäuse (2) dazu vorgesehen ist, die Drehung der Aufnahmetrommel (3) in eine erste Drehrichtung (30) freizugeben und in eine zweite Drehrichtung (31) zu sperren.

15. Pflanzenanbauvorrichtung (1) nach Anspruch 14, **dadurch gekennzeichnet, dass** eine zweite Sperrvorrichtung zwischen der Aufnahmetrommel (3) und dem Gehäuse (2) dazu vorgesehen ist, die Drehung der Aufnahmetrommel (3) in die erste Drehrichtung (30) in einer Freigabestellung freizugeben und in einer Sperrstellung zu sperren.
